# EUROPEAN PATENT APPLICATION

(11) **EP 4 369 178 A1**
(43) Date of publication of application: **15.05.2024**
(21) Application number: 22207280.3
(22) Date of filing: 14.11.2022
(51) Int. Cl.: G06F 7/544, G06F 7/76

(54) **METHOD AND APPARATUS FOR SECURE PROCESSING WHEN USING A HARDWARE CALCULATION UNIT**

(71) Applicant: Rheinisch-Westfälische Technische Hochschule (RWTH) Aachen, 52062 Aachen (DE)
(72) Inventor: Galicia Cota, Melvin Estuardo, 52072 Aachen (DE)
(74) Representative: WBH Wachenhausen Patentanwälte PartG mbB

(57) **Abstract**

A method and apparatus for secure processing of matrix multiplication using a hardware calculation unit (31; 63) as well as a corresponding apparatus and computer program is disclosed. The method for secure processing of a matrix multiplication using a hardware calculation unit (31; 63) adapted to perform matrix multiplications comprises receiving (S1) a matrix, encrypting (S2) the matrix by generating a permuted matrix by permuting the rows or the columns of the matrix with a first permutation vector, writing (S3) the permuted matrix to storage elements of the hardware calculation unit (31; 63) adapted to perform matrix multiplications, receiving (S4) an input vector which is to be multiplied with the matrix, and performing (S5) a matrix multiplication using the input vector and the hardware calculation unit (31; 63), wherein an output of the calculation provided by the hardware calculation unit (31; 63) is decrypted by applying an inverse of the first permutation vector to either the input vector or the output of the hardware calculation unit (31; 63).

## Description

### FIELD OF THE INVENTION

The present invention relates to a method for secure processing of matrix multiplications, e.g. when executing a machine learning model. It especially relates to a method of encrypting a matrix, e.g. the weights matrix, as to prohibit theft of the matrix values, i.e. the model, when stored in a calculation device. The present invention also relates to a corresponding processing apparatus and a corresponding computer program.

### BACKGROUND OF THE INVENTION

In present days, the use of machine learning models, for example neural networks, for various applications is known. Here, it has recently become possible to execute the matrix multiplications, which is needed for the execution of the machine learning model by using specifically adapted hardware. However, by using such adapted hardware, it became possible steel the specific machine learning model by reading the weight matrices from this storage of the hardware. This is especially true as certain hardware uses non-volatile memory to store therein the weights of the matrix, for example memristor-based crossbar arrays.

The storing of such weights in non-volatile memories of the calculation hardware is advantageous as one does not have to write the weights matrix into the storage of the crossbar array for every execution, but of course it provides for a larger risk of theft as the weights are stored permanently in the memristors of the crossbar arrays.

To avoid such theft of the weights matrix and thus the trained machine learning model, various methods of encryption and decryption have been presented, which, however, require a lot of time and energy and will also require writing the weights into the memristor for every execution and deleting the weights after the execution as to avoid theft.

This is especially disadvantageous when considering memristor crossbar arrays as they have a limited number of programming cycles, e.g. 10,000 to 100,000 writes cycles. If one would store the weights matrix in an encrypted form externally, decrypt it, write it into the memristors and delete it after execution to avoid theft, this will drastically limit the use as multiple programming cycles will be required for each execution. In addition, due to the required steps, the execution time will be extended, as the decryption and programming of the memristor must be performed every time. The same holds true for other applications of such hardware calculation units.

### SUMMARY OF THE INVENTION

It is thus an object of the present invention to provide for a method having increased security for processing a matrix multiplication using a hardware calculation unit.

This object is solved by the method of the independent claims.

In a first embodiment, a method for secure processing of a matrix multiplication using a hardware calculation unit adapted to perform matrix multiplications is shown.

In a first step, a matrix is received. The matrix can be any kind of matrix which shall be multiplied with a vector. Such heavy use of matrix multiplications arises e.g. during execution of machine learning models or in the context of neuromorphic computing. However, also other use cases such as in signal processing, e.g. Discrete Fourier Transformation or Forward Error Correction is possible. Here, the receiving could be considered for example the reading out of the matrix from a storage or the receiving via a signal which may be also the passing of the matrix from a different software module implemented in the same software. A matrix multiplication may be any of a matrix-matrix, vector-matrix or matrix-vector multiplication. In particular, a matrix multiplication may be the multiplication of a matrix stored in the hardware calculation unit, as will be discussed below, with an input vector, here referred to as a matrix-vector multiplication.

As a second step, the matrix is encrypted. For this purpose, a permuted matrix is generated. This means that either the rows or the columns of the matrix are permuted. In one example, the rows and the columns may be permuted. For this permutation of either the rows or the columns, a first permutation vector is used. Here, the permutation can be performed for example either by switching the storage positions of the various values of the respective rows or columns, by performing a respective mathematical operation of the first permutation vector and the matrix or even by generating pointers which basically indicate which input source, namely the original position of the row or column, should be transferred/mapped to which output, namely the permuted position of the rows or columns. Hence a permutation vector is to be considered as an information which indicates in which way the rows or columns should be exchanged or permuted. This permutation vector can also be considered to be a permutation matrix which when multiplied with the matrix results in a permutation of the rows or columns. As a result, a permuted matrix is achieved, which corresponds to an encrypted version of the original matrix. The permutation vector functions as a key to the permuted matrix, as will be described later.

In the next step, this permuted matrix is written to storage elements of a hardware calculation unit adapted to perform matrix multiplications. Such a hardware calculation unit adapted to perform matrix multiplications may for example comprise storage elements, e.g. memristors, arranged in an array, wherein each intersection corresponds to one storage element. As an example, such a hardware calculation unit adapted to perform matrix multiplications may be a memristor crossbar array. In such a memristor crossbar array, memristors are positioned in a form of an array and an input vector can be applied which is then multiplied with the matrix values as stored within the memristors. Here, the memristors are non-volatile storage elements. By writing the permuted matrices into the storage elements, the hardware calculation unit is adapted to perform a matrix multiplication with the permuted matrix if a specific input vector is applied/input to the hardware calculation unit.

Hence, the method now comprises the step of receiving an input vector which is to be multiplied with the matrix e.g. during execution of the machine learning model. An input vector can thus be the input vector of e.g. a machine learning model, the output of another layer of the machine learning model which is then to be used as the input vector for the next layer of the machine learning model during execution or another input vector used e.g. during the above mentioned processes, e.g. during neuromorphic computing or signal processing

The method then comprises the step of performing a matrix multiplication using the input vector and the hardware calculation unit. As to allow for a "decryption" of the result of this matrix multiplication, the previous permutation of the matrix must be reversed. For this purpose, an inverse of the first permutation vector is used as the key for decryption. Depending on whether the permutation was applied to the rows or the columns of the matrix, either the input vector has to be processed or the output of the hardware calculation unit needs to be processed and thus processed with the inverse of the first permutation vector. Hence, in the step of performing the matrix multiplication, the inverse of the first permutation vector is either applied to the input vector or to the output of the hardware calculation unit. Hence, the output of the performing of the matrix multiplication comprises the inputting of the input vector or the input vector having applied thereto the inverse of the first permutation vector as well as receiving the output of the hardware calculation unit and either using this output as the result of the matrix multiplication or applying the inverse of the first permutation vector to this output.

As a result, it is possible to provide for a method for secure processing wherein the elements of the matrix can be permanently stored into the storage elements of the hardware calculation unit but at the same time preventing theft of the values, e.g. forming a machine learning model, as the results of the calculation done by the hardware calculation unit can only be interpreted correctly if the permutation of the rows and/or the columns is known. Hence, this permutation functions as a key to e.g. the machine learning model. Further, it is not necessary to rewrite and delete the matrix values every time the calculation is executed which results in an extended lifetime of the device saving resources and time for replacement after the cycle is used up and also avoiding computation errors due to the many writing cycles. At the same time, using a memristor crossbar array with the described security solution allows for the possibility to switch of the device without having to rewrite the matrix as the memristors are non-volatile while still preventing theft of the underlying model.

The key can easily be stored in a secure storage and only transferred to a volatile memory during execution so that the key is deleted from the volatile memory once the process is completed or the energy is cut off.

In a further embodiment, the method is for secure processing of a machine learning model. In this case the matrix is a weights matrix corresponding to a layer of a machine learning model, the permuted matrix is a permuted weights matrix, and the input vector is an input vector which is to be multiplied with the weights matrix during execution of the machine learning model. Here, a machine learning model can be any kind of machine learning model, as for example a neural network. The processing in this regard is to be considered as the execution of the machine learning model. Hence, the present invention is not directed at the actual learning of the machine learning model but at the execution and thus the application of the machine learning model. As the person skilled in the art is aware, a machine learning model, such as a neural network, having multiple layers may be divided into weight matrices, wherein one weights matrix is equivalent to one layer. In other words, the applying of an input vector to a layer of a machine learning model can be considered as a matrix multiplication, wherein the matrix corresponds to and is derivable from the weights of the individual nodes of the respective layer. Such a matrix corresponding to the nodes of a machine learning model or of a layer of the machine learning model, respectively, is referred to as a weights matrix. This weights matrix is received.

In a further embodiment, the rows and the columns are permuted with a first permutation vector and a second permutation vector. For this purpose, the rows of the matrix are permuted with the first permutation vector and the columns of the matrix are permuted with the second permutation vector. To undo or decrypt the results, it is thus necessary to apply the inverse of the first permutation vector to the input vector before inputting the same to the hardware calculation unit and to apply the inverse of the second permutation vector to the output of the hardware calculation unit to receive the final output of the multiplication of the input vector with the matrix. It is to be noted that the method is not to be understood as limited to the given sequence of the permutation, but the columns may be permuted before permuting the rows.

In a further embodiment, the hardware calculation unit may be a memristor crossbar array and the writing of the permuted matrix will thus be the writing of the permuted matrix to the non-volatile memristors of the memristor crossbar array. This allows for an even more efficient handling and calculation using e.g. the machine learning models, as the memristor crossbar arrays are a very efficient way of handling and calculating matrix multiplications.

In a further step, the inverse of a permutation vector is applied by using elements of the inverse permutation vector as pointers mapping an input to an output. Hence, the elements of the permutation vector indicating how the rows or columns are to be permuted may be used as pointers mapping one input to one output. For example, when considering applying the permutation vector to the input vector before inputting it to the hardware calculation unit, the individual elements of the permutation vector may be transferred and used as pointers therefore mapping the specific rows of the input vector to the specific rows of the memristor or its input, accordingly. Thus, the use of pointers allows for an easy and very efficient handling of the permutations as they can be treated as a mapping between inputs and outputs without requiring a lot of computation power for mathematical calculations. The same applies when considering the output of the memristor crossbar array. Also here, pointers derived from the inverse permutation vector can be used to map specific outputs of the crossbar array to specific columns or storage areas for specific columns as to allow for an easy decryption.

According to a further embodiment, the first permutation vector and the second permutation vector, respectively, can be generated as a random permutation of the rows or columns, respectively. Hence, a random function can be used to shuffle numbers running from the first number assigned to the first row or column to the number associated to the last row or column, as to generate a random permutation.

These can then preferably be stored in a secure storage, which may not be accessed from outside. Such security models are known for a person skilled in the art. Further, also the storing on an encrypted hard drive or on an encrypted remote storage may be considered. Here, it is to be noted that either the first permutation vector or the inverse of the first permutation vector may be stored in this secure storage. In addition, the step of performing the matrix multiplication then comprises reading the first permutation vector or the inverse of the first permutation vector from the secure storage, and, in case of reading the first permutation vector from this secure storage, calculating the inverse before performing the above-mentioned decryption steps. After reading the first permutation vector or its inverse from the storage, it may be stored in a volatile storage for use during processing and can be deleted or will automatically be deleted after completion of the computation tasks as to reduce the risk of theft.

A further embodiment of the present invention is also directed at a processing apparatus for the secure processing of the machine learning model.

Such a processing apparatus can be implemented in hardware, software, or partially in hardware and in software, wherein, the above-described hardware calculation unit, is implemented in hardware, with specific control and read/write access units which may be implemented in software as well.

Such a processing apparatus comprises the above-mentioned hardware calculation unit adapted to perform matrix multiplications. Here, it is referred to the above with regard to the definition of the hardware calculation unit. In this hardware calculation unit, storage elements are comprised which store values of a matrix, wherein the storage elements have stored therein values of a permuted matrix. The permuted matrix is generated by permuting rows or columns of a matrix with a first permutation vector. It is referred to the above for details on the definition regarding the individual units.

Further, the processing apparatus comprises a receiving unit adapted to receive an input vector which is to be multiplied with the matrix during execution of the calculation, e.g. the machine learning model. Such a receiving unit can be a hardware or software element which may either receive such an input vector via a signal or for example read the input vector from a storage, such as the RAM of a computation device.

Further, a data processing unit is provided which is adapted to perform a matrix multiplication using the input vector and the hardware calculation unit. Here, this data processing unit is especially adapted to input the data based on the input vector to the hardware calculation unit to perform the mentioned matrix multiplication. Hence, the data processing unit uses the hardware calculation unit to perform the multiplication by inputting specific data to the hardware calculation unit and reading data from the same. Here, as described above, a decryption is done by either applying an inverse of the first permutation vector to the input vector or by applying the inverse of the first permutation vector to an output of the hardware calculation unit. Hence, the decryption of the output may either be performed already by inputting an adapted input vector to the hardware calculation unit or by adapting the output of the hardware calculation unit. It is referred to the above for the individual definition of the various features and steps.

In one embodiment, the processing apparatus is adapted for secure processing of a machine learning model. In this case, the matrix is a weights matrix corresponding to a layer of a machine learning model, the permuted matrix is a permuted weights matrix, and the input vector is an input vector which is to be multiplied with the weights matrix during execution of the machine learning model.

In one embodiment, as already described above regarding the method, the processing apparatus may be suitable to permute both, the rows as well as the columns of the matrix. For this purpose, the storage elements have stored thereon values of a permuted matrix, wherein the permuted matrix is generated by permuting rows of the matrix with the first permutation vector and by permuting columns of the matrix with a second permutation vector. To reverse the same, the data processing unit then needs to be adapted to decrypt the output of the calculation unit by applying an inverse of the first permutation vector to the input vector and by applying an inverse of the second permutation vector to the output of the hardware calculation unit, the two permutation vectors forming the key. It is to be noted that the abovementioned applying may e.g. be done by matrix multiplication or by providing pointers, as described above.

In a further embodiment, the processing apparatus may also be suitable for programming or mapping the permuted matrix to the storage elements of the hardware calculation unit. For this purpose, the processing unit is further adapted to encrypt the matrix by generating the permuted matrix by permuting the rows of the matrix with the first permutation vector and/or by permuting the columns of the matrix with the second permutation vector. The data processing unit is then adapted to write the permuted matrix to the storage elements of the hardware calculation unit.

In a further embodiment, the processing unit may comprise a volatile memory for storing the permutation vector(s), or its inverse, during runtime. Further, it may be adapted to read the permutation vector(s), or its inverse, from a secure storage and write it into the volatile memory. The secure storage may be located internally or externally from the processing unit.

In a further embodiment, the processing unit may comprise an output unit to output the result of the matrix multiplication. Here outputting may for example be implemented by writing the results into a memory or by transmitting it via a signal to a different unit or process.

In addition, the present invention is also directed at a computer program for performing the method of any of the previously described methods. A computer for execution of the computer program may be any kind of processing unit including also microcontrollers.

### BRIEF DESCRIPTION OF THE DRAWINGS

Figure 1 shows a schematic of a machine learning model.
Figure 2 shows a weights matrix.
Figure 3 shows a memristor array.
Figure 4a shows an unpermuted weights matrix.
Figure 4b shows a matrix in which the columns have been permuted.
Figure 4c shows a matrix in which the rows have been permuted.
Figure 5 shows the applying of an input vector to the hardware calculation unit.
Figure 6 shows a processing apparatus.
Figure 7 shows a flow-chart of the described process.

### DETAILED DESCRIPTION OF THE DRAWINGS

With regard to the above-mentioned figures, an exemplary embodiment directed to the use with neural models shall now be described.

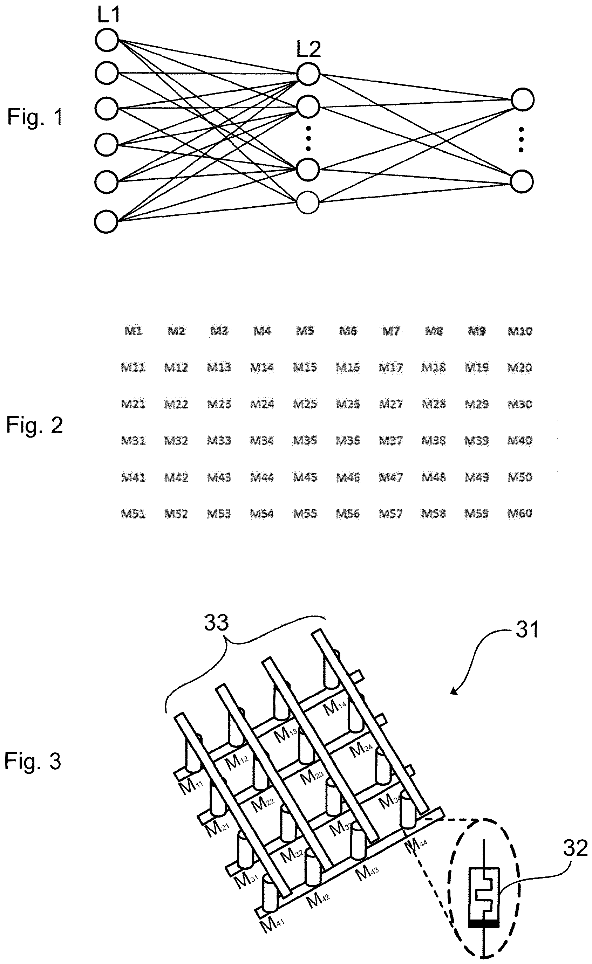

In Figure 1, a schematic representation of a machine learning model is shown. Here, a machine learning model having a layer L1, a layer L2 and an output layer with various nodes, which are shown as circles, is shown. Here, one can see how the output of the various layers is mapped to the input of the subsequent layer. Each of the nodes carries a certain weight which is trained during the training of the machine model. Each layer may now be described as a weights matrix as shown in Figure 2. The multiplication of the input to this layer with this weights matrix shown in Figure 2 thus represents the execution of the machine learning model in one layer.

Such a matrix multiplication may efficiently be handled using a memristor crossbar array 31 as shown in Figure 3. Here, denoted as M₁₁ to M₄₄, the weights of the weights matrix are written into the individual memristors 32. One memristor 32 is depicted in Figure 3. Thus, if one would want to use the memristor crossbar array 31 shown in Figure 3 to perform the matrix calculation for one layer of the machine learning model in Figure 1, one would need to derive the corresponding weights matrix in Figure 2, write the individual weights into the individual memristors 32 of the memristor crossbar array 31 and input the corresponding vector as an input 33 in Figure 3. One would then receive, as the output of the memristor crossbar array 31, the output of the matrix multiplication.

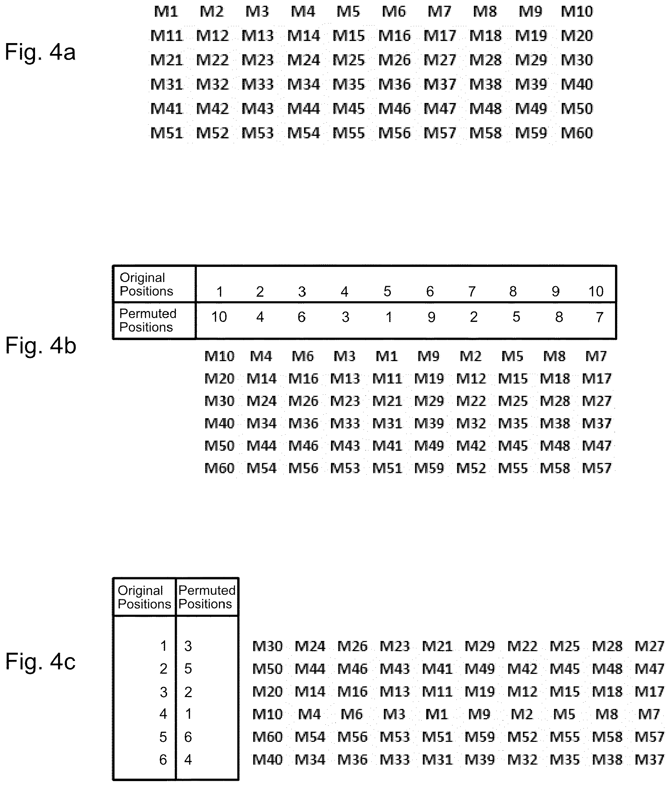

Now, as to limit the risk of theft of the machine learning model by theft of the weights from the memristor crossbar array 31, the prescribed permutations are performed which shall be described with regard to Figures 4a to 4c. Figure 4a shows the original weights matrix having the original weights M1 to M60. Now, with a first permutation vector, the individual columns may be permuted. Figure 4b shows the original positions of the individual columns in the top row and the permuted position in the bottom row. The permutation vector may thus be described as 10 4 6 3 1 9 2 5 8 7 or as a corresponding mathematical representation used for permuting the respective rows. After that, in the embodiment shown here, also the rows are permuted. Here, in Figure 4c, the original rows 1 to 6 are permuted such that they have the following sequence: 3 5 2 1 6 4. Hence, the permutation vector may be described as 3 5 2 1 6 4 or as a corresponding mathematical representation used for permuting the respective rows, e.g. a permutation matrics for permuting the rows by multiplication.

As the weights have now been encrypted by permuting the rows and the columns, these weights may be written to the memristors 32 in Figure 3. If one does not know how the rows and columns have been permuted, it is not possible to obtain the correct matrix multiplication result the memristor 32 as the two permutation vectors form the keys for the decryption of the output. Furthermore, in the case of applying the above to a machine learning model, as the model may be divided into one matrix per layer, this allows to use individual permutation vectors, i.e. keys, per layer which further increases security for the overall model. Of course, also one pair of permutation vectors may be used for all layers, i.e. matrices or the above described process is only applied to one of the layers.

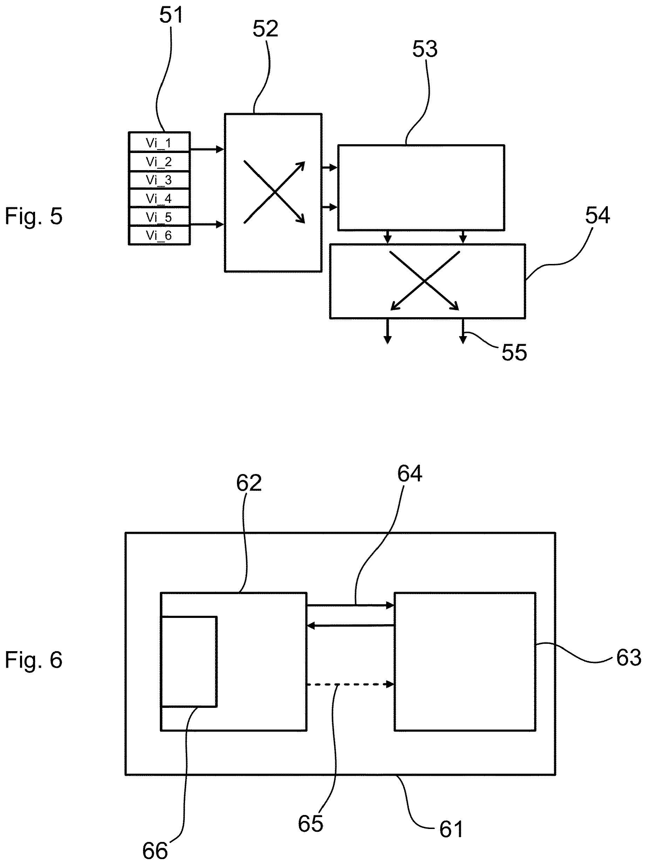

When executing the machine learning model, the input vector 51 in Figure 5 now needs to be first altered by applying the inverse of the permutation vector used for the permutation of the rows which is shown as the pointers 52 pointing the various elements Vi_1 to Vi_6 to the respective rows of the hardware calculation unit 53. As both, the rows and the columns of the weights matrix have been permuted, also the output of the hardware calculation unit is not usable directly but needs to be further decrypted by applying the inverse of the permutation vector used for permuting the columns, which is shown with the pointers 54 in Figure 5 mapping specific columns of the hardware calculation unit to specific outputs 55. The output 55 then corresponds to a decrypted version and thus corresponds to a multiplication of the original input vector with the original weights matrix.

Figure 6 now shows a processing apparatus 61 according to the present invention. Here, the processing apparatus 61 comprises the hardware calculation unit 63 and the data processing unit 62. As described above, the receiving unit 66 receives the input vector which is to be multiplied with the weights matrix during execution of the machine learning model. The data processing unit 62 is then used to, in the present example in which both the rows and the columns are permuted, apply the inverse of the permutation vector used to permute the rows to the input vector and input this via the connection 64 to the hardware calculation unit 63. The hardware calculation unit 63 then performs the matrix multiplication and communicates the result back via the connection 64 to the data processing unit 62. The data processing unit 62 then, in the present example, needs to apply the inverse of the permutation vector used for permuting the columns to fully decrypt the results. The results may then, with an output unit, which is not shown in Figure 6, be output to a different process, software, or device.

In one embodiment, also the programming of the permuted weights matrix may be performed via the connection 65 in Figure 6. For this purpose, the data processing unit 62 is further adapted to encrypt the weights matrix by performing the respective rows and columns permutation and then writing this permuted weights matrix to the hardware calculation unit 63.

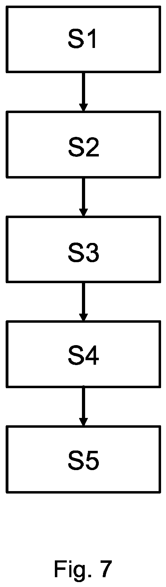

In Figure 7, a flow chart of the method for secure processing of a machine learning model is shown. The process shown here comprises both the programming of the weights matrix and the applying of the machine learning model. It is clear to the person skilled in the art, that the sub-process of encrypting the weights matrix and writing the same to the hardware calculation unit 63 as well as the sub-process of receiving the input vector and performing the respective calculation vector may be separated.

In the process of Figure 7, first, a weights matrix is received in step S1 using for example the receiving unit 66. This weights matrix is then encrypted, step S2, by generating the permuted weights matrix by permuting the rows and columns with a first and a second permutation vector, as described above. This permuted weights matrix is then written in step S3 to the memristors 32 of the memristor crossbar array 31 or the hardware calculation unit 63, respectively. In step S4, an input vector is then received via the receiving unit 66. In step S5, the matrix multiplication is performed by performing the permutation of the input vector, applying the same to the hardware calculation unit 63 or the memristor crossbar array 31, respectively, receiving the output of the unit 63, 31, and applying the inverse of the permutation vectors used to permute the columns, to receive the final result of the matrix multiplication of the input vector with the original weights matrix. In a further step, which is not shown in Figure 7, the final result may then be output to a storage, a different software, or a different process.

### REFERENCE SIGNS

- 31: memristor crossbar array
- 32: memristor
- 33: input of memristor crossbar array
- 51: input vector
- 52: pointers
- 53: hardware calculation unit
- 54: pointers
- 55: outputs
- 61: processing apparatus
- 62: data processing unit
- 63: hardware calculation unit
- 64: applying input vector and receiving result
- 65: programming permuted weights matrix
- 66: receiving unit
- S1: receiving weights matrix
- S2: encrypting weights matrix
- S3: writing permuted weights matrix
- S4: receiving input vector
- S5: performing matrix multiplication

## Claims

1. Method for secure processing of a matrix multiplication using a hardware calculation unit
(31; 63) adapted to perform matrix multiplications, comprising:
receiving (S1) a matrix;
encrypting (S2) the matrix by generating a permuted matrix by permuting the rows or the columns of the matrix with a first permutation vector;
writing (S3) the permuted matrix to storage elements of the hardware calculation unit (31; 63) adapted to perform matrix multiplications;
receiving (S4) an input vector which is to be multiplied with the matrix; and
performing (S5) a matrix multiplication using the input vector and the hardware calculation unit (31; 63), wherein an output of the calculation provided by the hardware calculation unit (31; 63) is decrypted by applying an inverse of the first permutation vector to either the input vector or the output of the hardware calculation unit (31; 63).

2. Method of the preceding claim 1, wherein the method is for secure processing of a
machine learning model, and wherein
the matrix is a weights matrix corresponding to a layer of a machine learning model;
the permuted matrix is a permuted weights matrix; and
the input vector is an input vector which is to be multiplied with the weights matrix during execution of the machine learning model.

3. Method of any of the preceding claim, wherein
in the step of encrypting (S2), the rows of the matrix are permuted with the first permutation vector;
in the step of performing (S5) the matrix multiplication, the inverse of the first permutation vector is applied to the input vector;
the step of encryption (S2) further comprises permuting the columns of the matrix with a second permutation vector; and
the step of performing (S5) the matrix multiplication further comprises applying an inverse of the second permutation vector to the output of the hardware calculation unit (31; 63).

4. Method of any of the preceding claims, wherein
the hardware calculation unit (31; 63) is a memristor crossbar array (31) and wherein
the step of writing (S3) the permuted matrix to the storage elements comprises writing the permuted matrix to non-volatile memristors (32) of the memristor crossbar array (31).

5. Method of any of preceding claims, wherein
applying an inverse of a permutation vector is performed by using elements of the inverse permutation vector as pointers mapping an input to an output.

6. Method of any of preceding claims, further comprising
generating the first permutation vector as a random permutation of the row or column numbers; and
storing the first permutation vector or the inverse of the first permutation vector in a secure storage, wherein
the step of performing (S5) a matrix multiplication further comprises reading the first permutation vector or the inverse of the first permutation vector from the secure storage.

7. Processing apparatus (61) for the secure processing of a matrix multiplication, comprising
a hardware calculation unit (31; 63) adapted to perform matrix multiplications, wherein the hardware calculation unit (31; 63) comprising storage elements to store values of a matrix, wherein the storage elements have stored thereon values of a permuted matrix, the permuted matrix being generated by permuting rows or columns of a matrix with a first permutation vector;
a receiving (66) unit adapted to receive an input vector which is to be multiplied with the matrix during execution of the machine learning model; and
a data processing unit (62) adapted to perform a matrix multiplication using the input vector and the hardware calculation unit (31; 63) by inputting data based on the input vector to the hardware calculation unit (31; 63), wherein the data processing unit (62) is further adapted to decrypt the output of the calculation provided by the hardware calculation unit (31; 63) by applying an inverse of the first permutation vector to either the input vector or the output of the hardware calculation unit (31; 63).

8. Processing apparatus of the preceding claim, wherein
the processing apparatus is adapted for secure processing of a machine learning model;
the matrix is a weights matrix corresponding to a layer of a machine learning model;
the permuted matrix is a permuted weights matrix; and
the input vector is an input vector which is to be multiplied with the weights matrix during execution of the machine learning model.

9. Processing apparatus of any of the preceding claims, wherein
the storage elements have stored thereon values of a permuted matrix, the permuted matrix being generated by permuting rows of the matrix with the first permutation vector and by permuting columns of the matrix with a second permutation vector; and
the data processing unit (62) is adapted to decrypt the output of the calculation provided by the hardware calculation unit (31; 63) by applying an inverse of the first permutation vector to the input vector and by applying an inverse of the second permutation vector to the output of the hardware calculation unit (31; 63).

10. Processing apparatus of any of the preceding claims, wherein
the receiving unit (66) is further adapted to receive the matrix; and
the data processing unit (62) is further adapted to
encrypt the matrix by generating the permuted matrix by permuting the rows of the matrix with the first permutation vector and by permuting the columns of the matrix with the second permutation vector; and
writing the permuted matrix to the storage elements of the hardware calculation unit (31; 63).

11. A computer program comprising instructions which, when the program is executed by a computer, cause the computer to carry out the method of any of the previous claims.
